# EUROPEAN PATENT APPLICATION

(11) **EP 4 764 951 A1**
(43) Date of publication of application: **24.06.2026**
(21) Application number: 25222241.9
(22) Date of filing: 10.12.2025
(51) Int. Cl.: G06N 3/045, G06N 3/084, G06N 3/082, G06N 3/0464

(54) **AN APPARATUS AND A METHOD FOR DETERMINING ONE OR MORE CHARACTERISTICS FOR INPUT INFORMATION FOR A MACHINE LEARNING MODEL**

(30) Priority: 17.12.2024 FI 20246474
(71) Applicant: Nokia Solutions and Networks Oy, 02610 Espoo (FI)
(72) Inventor: WILHELMI, Francisco, Gualba (ES); SALAMI, Dariush, Helsinki (FI)
(74) Representative: Bryers Intellectual Property Ltd

(57) **Abstract**

An apparatus comprising: at least one processor, and at least one memory storing instructions that, when executed by the at least one processor, cause the apparatus at least to: determine, using a first machine learning model, one or more characteristics for input information for a second machine learning model based on first information characterizing a context associated with the second machine learning model, provide the input information having the determined one or more characteristics to the second machine learning model.

## Description

### Field of the Disclosure

The disclosure relates to an apparatus for a machine learning model.

The disclosure further relates to a method for a machine learning model.

### Background

Machine learning (ML) is an area of computer science related to algorithms and models that can be used for processing input information, e.g., to perform predictions based on the input information. The predictions provided by a machine learning model may, e.g., be used to control an operation of a technical system and/or components of a technical system.

### Summary

Various example embodiments of the disclosure are set out by the independent claims. The example embodiments and features, if any, described in this specification, that do not fall under the scope of the independent claims, are to be interpreted as examples useful for understanding various example embodiments of the disclosure.

Some examples relate to an apparatus comprising: at least one processor, and at least one memory storing instructions that, when executed by the at least one processor, cause the apparatus at least to: determine, using a first machine learning model, one or more characteristics for input information for a second machine learning model based on first information characterizing a context associated with the second machine learning model, provide the input information having the determined one or more characteristics to the second machine learning model. In some examples, this may enable to improve at least one of a) predictive accuracy, or b) operational costs (e.g., reduce operational costs) of the second machine learning model, e.g., depending on the context, or c) a combination of the predictive accuracy and the operational costs, e.g., depending on the context associated with the second machine learning model.

As an example, the second machine learning model may, e.g., be configured to perform one or more predictions based on the input information, and by adapting the one or more characteristics for the input information, an operation of the second machine learning model may be optimized, e.g., depending on the context. In some examples, the context may characterize a context in which predictions are to be made by the second machine learning model.

In some examples, the instructions, when executed by the at least one processor, cause the apparatus to: determine, based on processing the input information having the determined one or more characteristics by using the second machine learning model, second information characterizing at least one of: a) a predictive accuracy of the second machine learning model with respect to the input information, or b) costs associated with an execution of the second machine learning model using the input information.

In some examples, the second information may also combine the aforementioned aspects a), b). As an example, the second information may, e.g., characterize a combination of the predictive accuracy of the second machine learning model with respect to the input information and the costs associated with an execution of the second machine learning model using the input information. In some examples, a predetermined function may be used for combining the predictive accuracy with the costs, wherein the predetermined function may, for example, comprise or represent at least one of: a ratio, or a sum, e.g., a weighted sum.

In some examples, the instructions, when executed by the at least one processor, cause the apparatus to: train at least one of the first machine learning model or the second machine learning model based at least on the second information. As an example, a conventional training technique, based, e.g., on a backpropagation algorithm, may be used for performing the training, e.g., based on the second information, and, optionally, based on reference information.

In some examples, the training of at least one of the first machine learning model or the second machine learning model may, e.g., comprise at least one of: a) training the first machine learning model to reduce operational costs, e.g., execution costs, of the second machine learning model, e.g., for a given context, or b) training the second machine learning model to attain a predetermined predictive accuracy, or c) training, e.g., jointly training, both the first machine learning model and the second machine learning model to reduce the operational costs and/or to attain the predetermined predictive accuracy.

In some examples, the training may comprise: providing training data with a plurality of different characteristics to the second machine learning model, and, optionally, adapting one or more parameters of at least one of the first machine learning model or the second machine learning model based on the second information obtained by processing the training data with the plurality of different characteristics using the second machine learning model.

In some examples, the one or more characteristics for the input information characterize at least one of: a) a dimensionality of the input information, or b) a resolution (e.g., temporal or spatial or other type of resolution) of the input information, or c) a modality of the input information (e.g., type of the input data such as, e.g., image data, or text data, or time series data, or graph data, or the like), or d) a numerical range of the input information, or e) a noise of the input information, or f) context metadata, e.g., metadata related to the context. In some examples, providing context metadata may, e.g., enable to provide context-related information to the second machine learning model.

In some examples, the instructions, when executed by the at least one processor, cause the apparatus to perform at least one of: a) adapting an input of the second machine learning model to the determined one or more characteristics, or b) processing the input information having the determined one or more characteristics using the second machine learning model, e.g., performing inference based on the input information having the determined one or more characteristics using the second machine learning model.

In some examples, wherein the second machine learning model comprises at least one input layer, adapting the input of the second machine learning model to the determined one or more characteristics may comprise adapting the at least one input layer (e.g., a number of processing elements, e.g., artificial neurons, and/or any other aspect of the at least one input layer) to the determined one or more characteristics.

As an example, the second machine learning model may be an artificial neural network (NN), e.g., a deep neural network (DNN), e.g. of the convolutional NN (CNN) type. In some other examples, other types of neural networks or topologies for machine learning may be used for implementing the second machine learning model.

Similarly, in some examples, the first machine learning model may be an artificial neural network (NN), e.g., a deep neural network (DNN), e.g. of the convolutional NN (CNN) type. In some other examples, other types of neural networks or topologies for machine learning may be used for implementing the first machine learning model.

In some examples, the instructions, when executed by the at least one processor, cause the apparatus to perform at least one of: a) processing context information characterizing the context associated with the second machine learning model, or b) encoding the context information to obtain a condensed representation of the context. In some examples, the processing of the context information may, e.g., comprise at least one of: a1) determining the context information, or a2) receiving the context information, e.g., from a further entity, or a3) modifying the context information, e.g., based at least on the second information.

In some examples, encoding the context information to obtain a condensed representation of the context may be performed by using an encoder, e.g., a further machine learning model, e.g., neural network, e.g., DNN, of the encoder type, which may be configured to receive and to encode the context information to provide the condensed representation of the context.

In some examples, the first information may comprise the context information or the condensed representation of the context.

In some examples, the context characterizes at least one of: a) a policy for the second machine learning model, or b) a temporal context, or c) an environmental context, or d) information related to at least one data source configured to provide the input information, or e) a type of the input information, or f) a human-centric context, or g) traffic-related context information, h) energy cost-related context information, or i) safety-related context information. In some examples, the context is not limited to the above-mentioned aspects a) to i). Rather, in some examples, the context may be characterized by any internal or external data to the ML model that is related to and/or may effect certain behavior variations of the second machine learning model itself. In some examples, information related to or characterizing the context may, e.g., be acquired from a combination of multiple information sources.

In some examples, the instructions, when executed by the at least one processor, cause the apparatus to: manage data for the second machine learning model, e.g., data which may potentially be used as input information for the second machine learning model, based on at least one of a) the first information, or b) the determined one or more characteristics for the input information.

In some examples, managing the data comprises at least one of: a) collecting the data, or b) processing the data, or c) providing at least a portion of the data as the input information having the determined one or more characteristics to the second machine learning model, or d) modifying at least one aspect of at least one data source for providing the data. As an example, modifying at least one aspect of at least one data source for providing the data may, e.g., comprise modifying a frequency at which at least one data source for providing the data reports the data.

In some examples, the instructions, when executed by the at least one processor, cause the apparatus to perform at least one of: a) providing at least one of a1) the first machine learning model, or a2) the second machine learning model, or b) operating at least one of b1) the first machine learning model, or b2) the second machine learning model, e.g., for at least one of training or inference.

Thus, in other words, in some examples, the apparatus according the disclosure may perform at least one of providing or operating at least one of the first or second machine learning models (and/or an optional encoder model for encoding context information). Note, however, that in some other examples, the apparatus according the disclosure does not necessarily provide or operate any of the first or second machine learning models. Rather, in some examples, the first or second machine learning models may, e.g., be provided and/or operated by at least one further device or apparatus, respectively.

In some examples, the instructions, when executed by the at least one processor, cause the apparatus to perform at least one of: a) dynamically (e.g., during an operation, e.g., during at least one of training or inference) changing the one or more characteristics for the input information for the second machine learning model, e.g., for at least one of training or inference, based at least on the first information (and, optionally, also based on the second information), or b) dynamically modifying at least one aspect of managing data for the second machine learning model based at least on the second information (and, optionally, also based on the first information).

In some examples, dynamically changing the one or more characteristics for the input information for the second machine learning model based at least on the first information may be performed to improve, e.g., dynamically improve, at least one of a) predictive accuracy, or b) operational costs of the second machine learning model, or c) a combination of the predictive accuracy and the operational costs of the second machine learning model, e.g., depending on the context. Thus, in some examples, aspects influencing at least one of the predictive accuracy or the operational costs of the second machine learning model may be dynamically changed, e.g., during runtime, e.g., inference, of the second machine learning model, which in some examples e.g. enables to dynamically optimize operational costs of the second machine learning model, thus, e.g., saving energy, e.g., for performing the inference. In some examples, e.g., depending on a change of the context, substantial energy savings may thus be attained by dynamically adapting the one or more characteristics for the input information for the second machine learning model based at least on the first information.

In some examples, the managing of data for the second machine learning model based at least on the second information may comprise at least one of: a) collecting the data, or b) processing the data, or c) storing the data, or d) handling at least one data source configured to provide the data.

Some examples relate to an apparatus comprising means for: determining, using a first machine learning model, one or more characteristics for input information for a second machine learning model based on first information characterizing a context associated with the second machine learning model, providing the input information having the determined one or more characteristics to the second machine learning model.

In some examples, the means for determining the one or more characteristics and for providing the input information having the determined one or more characteristics to the second machine learning model may, e.g., comprise at least one processor, and at least one memory storing instructions that, when executed by the at least one processor, cause the apparatus to perform at least one of the aforementioned aspects of determining the one or more characteristics and of providing the input information having the determined one or more characteristics to the second machine learning model.

In some examples, the means for determining the one or more characteristics and for providing the input information having the determined one or more characteristics to the second machine learning model may, e.g., comprise circuitry configured to perform at least one of the aforementioned aspects of determining the one or more characteristics and of providing the input information having the determined one or more characteristics to the second machine learning model.

In some examples, the term "circuitry", as used in this application, may, e.g., refer to one or more or all of the following:
(a) hardware-only circuit implementations (such as implementations in only analog and/or digital circuitry), or
(b) combinations of hardware circuits and software, such as:
   (b1) a combination of analog and/or digital hardware circuit(s) with software/firmware and
   (b2) any portions of hardware processor(s) with software (including digital signal processor(s)), software, and memory(ies) that work together to cause an apparatus, to perform various aspects of the disclosure), or
(c) hardware circuit(s) and or processor(s), such as a microprocessor(s) or a portion of a microprocessor(s), that requires software (e.g., firmware) for operation, but the software may not be present when it is not needed for operation.

In some examples, this definition of circuitry applies to all uses of this term in this application, including in any claims. As a further example, as used in this application, the term circuitry also covers an implementation of, e.g., merely, a hardware circuit or processor (or multiple processors) or portion of a hardware circuit or processor and its (or their) accompanying software and/or firmware.

Some examples relate to a method, comprising: determining, using a first machine learning model, one or more characteristics for input information for a second machine learning model based on first information characterizing a context associated with the second machine learning model, providing the input information having the determined one or more characteristics to the second machine learning model.

Some examples relate to a computer program comprising instructions which, when executed by an apparatus, cause the apparatus to perform the method according to the disclosure.

Some examples relate to a a computer-readable storage medium, for example a non-transitory computer-readable storage medium, comprising the computer program according to the disclosure.

Some examples relate to a data carrier signal carrying and/or characterizing the computer program according to the disclosure.

### Brief Description of the Figures

- Fig. 1A: shows a simplified block diagram according to some examples,
- Fig. 1B: shows a simplified block diagram according to some examples,
- Fig. 2: shows a simplified block diagram according to some examples,
- Fig. 3: shows a simplified flow chart according to some examples,
- Fig. 4: shows a simplified flow chart according to some examples,
- Fig. 5: shows a simplified block diagram according to some examples,
- Fig. 6: shows a simplified flow chart according to some examples,
- Fig. 7: shows a simplified flow chart according to some examples,
- Fig. 8: shows a simplified flow chart according to some examples,
- Fig. 9: shows a simplified flow chart according to some examples,
- Fig. 10: shows a simplified flow chart according to some examples,
- Fig. 11: shows aspects of an architecture according to some examples,
- Fig. 12: shows a simplified flow chart according to some examples,
- Fig. 13: shows a simplified flow chart according to some examples,
- Fig. 14: shows a simplified flow chart according to some examples,
- Fig. 15: shows a simplified block diagram according to some examples.

### Description of some Example Embodiments

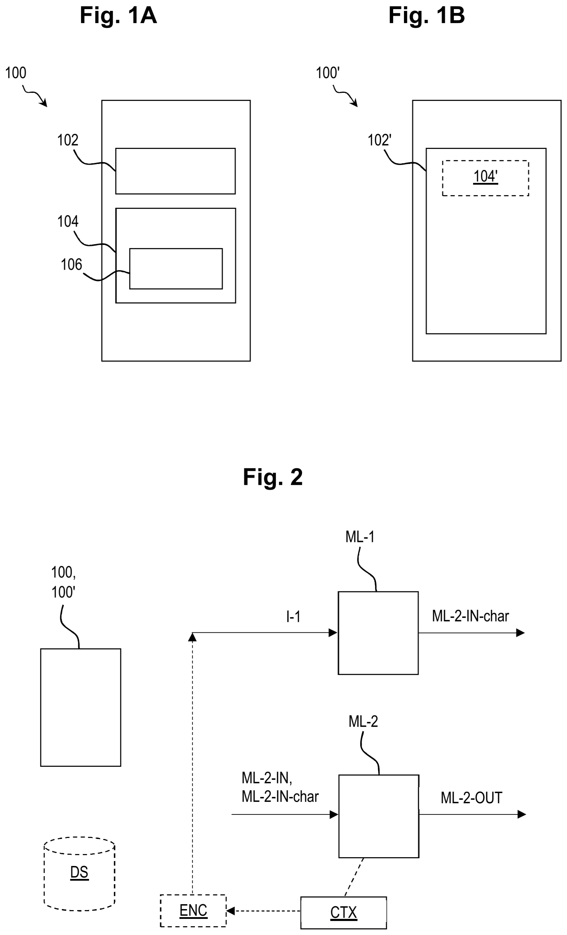

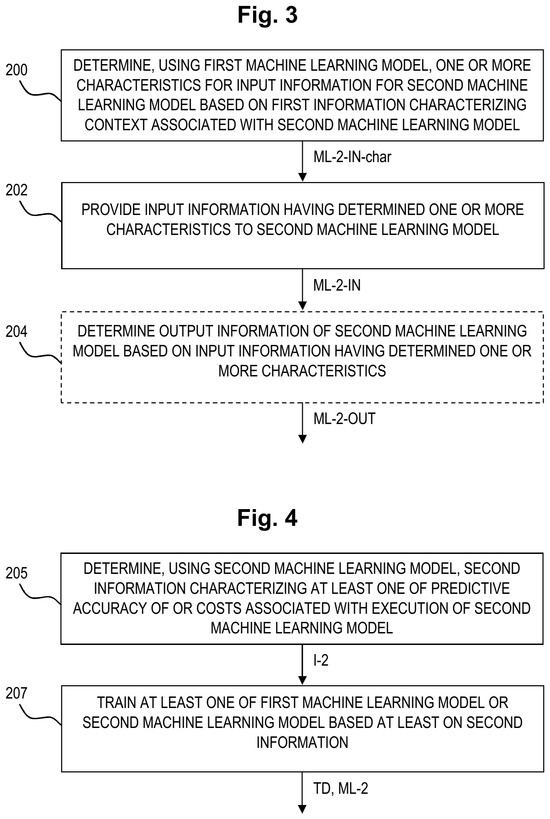

Some examples, see, for example, Fig. 1A, 2, 3, relate to an apparatus 100 comprising: at least one processor 102, and at least one memory 104 storing instructions 106 that, when executed by the at least one processor 102, cause the apparatus 100 at least to: determine 200 (Fig. 3), using a first machine learning model ML-1, one or more characteristics ML-2-IN-char for input information ML-2-IN for a second machine learning model ML-2 based on first information I-1 characterizing a context CTX associated with the second machine learning model ML-2, provide 202 the input information ML-2-IN having the determined one or more characteristics ML-2-IN-char to the second machine learning model ML-2. The optional block 204 of Fig. 3 symbolizes a determination of output information ML-2-OUT, e.g., predictions, by the second machine learning model ML-2 based on the input information ML-2-IN having the determined one or more characteristics.

In some examples, aspects of the blocks 200, 202 of Fig. 3 may enable to improve at least one of a) predictive accuracy, or b) operational costs (e.g., reduce operational costs) of the second machine learning model ML-2, e.g., depending on the context CTX, or c) a combination of the predictive accuracy and the operational costs, e.g., depending on the context CTX associated with the second machine learning model.

As an example, Fig. 2, the second machine learning model ML-2 may, e.g., be configured to perform one or more predictions based on the input information ML-2-IN, e.g., to obtain output information ML-2-OUT, and by adapting the one or more characteristics ML-2-IN-char for the input information ML-2-IN, an operation of the second machine learning model ML-2 may be optimized, e.g., depending on the context CTX. In some examples, the context CTX may characterize a context in which predictions are to be made by the second machine learning model ML-2. Further details and aspects of the context CTX according to further examples are explained below.

It is to be noted that potential input information or input data (e.g., "raw input data"), e.g., for at least the second machine learning model ML-2, may be may be independent of the one or more characteristics with which it may, e.g., later on, be provided to the second machine learning model ML-2. In other words, collecting potential input data for at least the second machine learning model ML-2 may, in some examples, be performed independent of the context CTX or the first information I-1, e.g., using one or more data sources DS. In some examples, the input information ML-2-IN for the second machine learning model ML-2 having the determined one or more characteristics ML-2-IN-char may be determined based on the so collected raw input data, e.g., by processing the raw input data, or by using only a part of the collected raw input data as the input information ML-2-IN for the second machine learning model ML-2.

In some examples, Fig. 4, the instructions 106, when executed by the at least one processor 102, cause the apparatus 100 to: determine 205, based on processing the input information ML-2-IN having the determined one or more characteristics by using the second machine learning model ML-2, second information I-2 characterizing at least one of: a) a predictive accuracy of the second machine learning model ML-2 with respect to the input information ML-2-IN, or b) costs associated with an execution of the second machine learning model ML-2 using the input information ML-2-IN.

In some examples, the second information I-2 may also combine the aforementioned aspects a), b). As an example, the second information I-2 may, e.g., characterize a combination of the predictive accuracy of the second machine learning model ML-2 with respect to the input information and the costs associated with an execution of the second machine learning model ML-2 using the input information. In some examples, a predetermined function may be used for combining the predictive accuracy with the costs, wherein the predetermined function may, for example, comprise or represent at least one of: a ratio, or a sum, e.g., a weighted sum.

In some examples, Fig. 4, the instructions 106, when executed by the at least one processor 102, cause the apparatus 100 to: train 207 at least one of the first machine learning model ML-1 or the second machine learning model ML-2 based at least on the second information I-2. As an example, a conventional training technique, based, e.g., on a backpropagation algorithm, may be used for performing the training 207, e.g., based on the second information I-2, and, optionally, based on reference information such as training data and associated ground truth data, or the like.

In some examples, Fig. 4, the training 207 of at least one of the first machine learning model ML-1 or the second machine learning model ML-2 may, e.g., comprise at least one of: a) training the first machine learning model to reduce operational costs, e.g., execution costs, of the second machine learning model ML-2, e.g., for a given context CTX, or b) training the second machine learning model ML-2 to attain a predetermined predictive accuracy, or c) training, e.g., jointly training, both the first machine learning model ML-1 and the second machine learning model ML-2 to reduce the operational costs and/or to attain the predetermined predictive accuracy.

In some examples, Fig. 4, the training 207 may comprise: providing training data TD with a plurality of different characteristics to the second machine learning model ML-2, and, optionally, adapting one or more parameters (not shown) of at least one of the first machine learning model ML-1 or the second machine learning model ML-2 based on the second information I-2 obtained by processing the training data TD with the plurality of different characteristics using the second machine learning model ML-2.

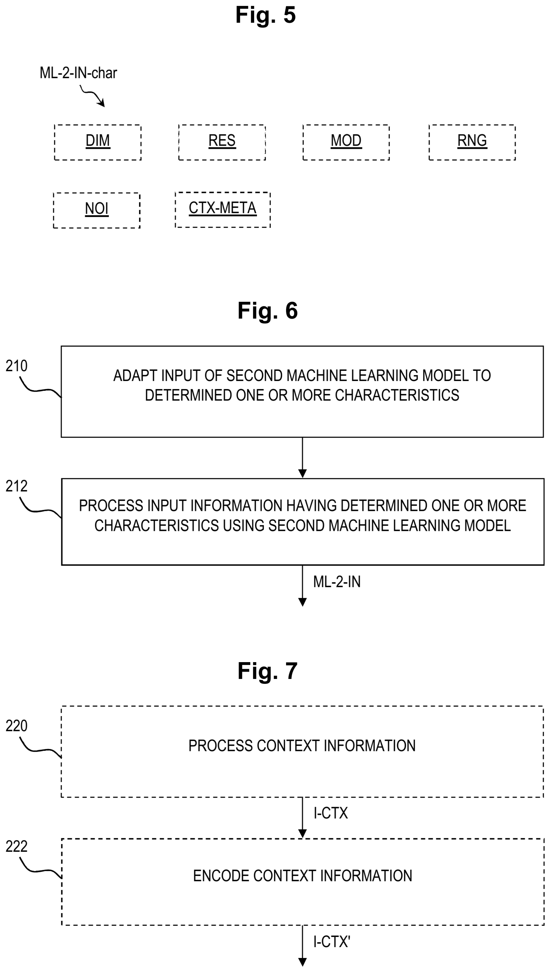

In some examples, Fig. 5, the one or more characteristics ML-2-IN-char for the input information ML-2-IN characterize at least one of: a) a dimensionality DIM of the input information, or b) a resolution RES (e.g., temporal or spatial or other type of resolution) of the input information, or c) a modality MOD of the input information (e.g., type of the input data such as, e.g., image data, or text data, or time series data, or graph data, or the like), or d) a numerical range RNG of the input information, or e) a noise NOI of the input information, or f) context metadata CTX-META, e.g., metadata related to the context CTX. In some examples, providing context metadata may, e.g., enable to provide context-related information to the second machine learning model ML-2.

In some examples, Fig. 6, the instructions 106, when executed by the at least one processor 102, cause the apparatus 100 to perform at least one of: a) adapting 210 an input of the second machine learning model ML-2 to the determined one or more characteristics ML-2-IN-char, or b) processing 212 the input information ML-2-IN having the determined one or more characteristics by means of the second machine learning model ML-2, e.g., using the second machine learning model ML-2, e.g., performing inference with the second machine learning model ML-2 based on the input information ML-2-IN having the determined one or more characteristics.

In some examples, Fig. 2, wherein the second machine learning model ML-2 comprises at least one input layer (not shown), adapting 210 (Fig. 6) the input of the second machine learning model ML-2 to the determined one or more characteristics may comprise adapting the at least one input layer (e.g., a number of processing elements, e.g., artificial neurons, and/or any other aspect of the at least one input layer) to the determined one or more characteristics.

As an example, Fig. 2, the second machine learning model ML-2 may be an artificial neural network (NN or ANN), e.g., a deep neural network (DNN), e.g. of the convolutional NN (CNN) type. In some other examples, other types of neural networks or topologies for machine learning may be used for implementing the second machine learning model ML-2.

Similarly, in some examples, Fig. 2, the first machine learning model ML-1 may be an artificial neural network (NN), e.g., a deep neural network (DNN), e.g. of the convolutional NN (CNN) type. In some other examples, other types of neural networks or topologies for machine learning may be used for implementing the first machine learning model ML-1.

In some examples, Fig. 7, the instructions 106, when executed by the at least one processor 102, cause the apparatus 100 to perform at least one of: a) processing 220 context information I-CTX characterizing the context CTX (Fig. 2) associated with the second machine learning model ML-2, or b) encoding 222 the context information I-CTX to obtain a condensed representation I-CTX' of the context CTX. In some examples, the processing 220 of the context information may, e.g., comprise at least one of: a1) determining the context information I-CTX, e.g., locally, e.g., by the apparatus 100, or a2) receiving the context information, e.g., from a further entity (not shown), or a3) modifying the context information I-CTX, e.g., based at least on the second information I-2.

In some examples, Fig. 7, encoding 222 the context information I-CTX to obtain the condensed representation I-CTX' of the context CTX may be performed by using an encoder ENC (Fig. 2), e.g., a further machine learning model, e.g., neural network, e.g., DNN, of the encoder type, which may be configured to receive and to encode the context information I-CTX to provide the condensed representation I-CTX' of the context.

In some examples, Fig. 2, the first information I-1 may comprise the context information I-CTX or the condensed representation I-CTX' of the context CTX.

In some examples, Fig. 2, the context CTX characterizes at least one of: a) a policy for the second machine learning model ML-2, or b) a temporal context, or c) an environmental context, or d) information related to at least one data source DS (Fig. 2) configured to provide the input information ML-2-IN, or e) a type of the input information ML-2-IN, or f) a human-centric context, or g) traffic-related context information, h) energy cost-related context information, or i) safety-related context information.

In some examples, Fig. 2, the context CTX is not limited to the above-mentioned aspects a) to i). Rather, in some examples, the context CTX may be characterized by any internal or external data to the second machine learning model ML-2 that is related to and/or may effect certain behavior variations of the second machine learning model ML-2 itself. In some examples, information related to or characterizing the context CTX may, e.g., be acquired from a combination of multiple information sources (not shown).

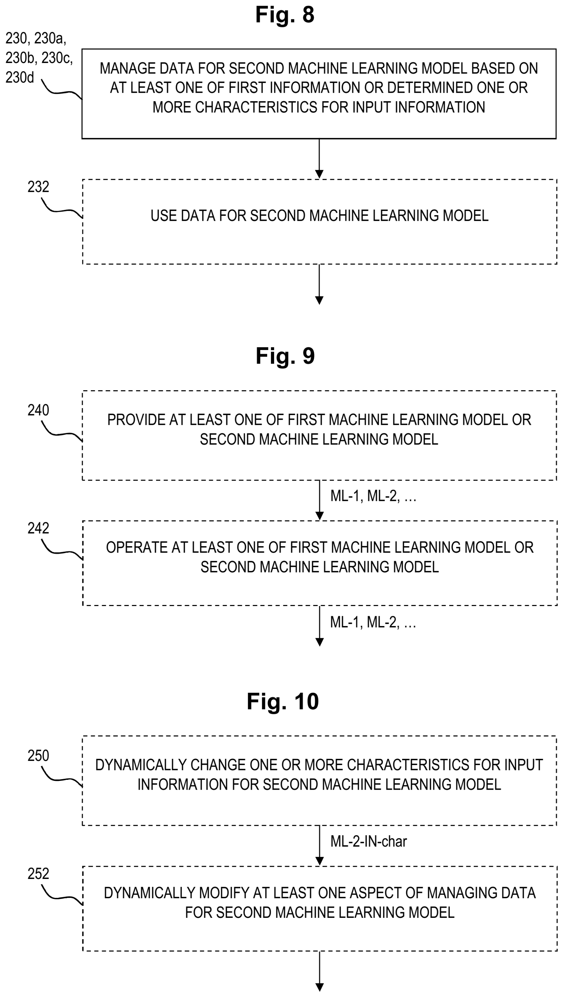

In some examples, Fig. 8, the instructions 106, when executed by the at least one processor 102, cause the apparatus 100 to: manage 230 data for the second machine learning model ML-2, e.g., data which may potentially be used as input ML-2-IN information for the second machine learning model ML-2, based on at least one of a) the first information I-1, or b) the determined one or more characteristics ML-2-IN-char for the input information.

In some examples, Fig. 8, managing 230 the data comprises at least one of: a) collecting 230a the data, or b) processing 230b the data, or c) providing 230c at least a portion of the data as the input information ML-2-IN having the determined one or more characteristics to the second machine learning model ML-2, or d) modifying 230d at least one aspect of at least one data source DS (Fig. 2) for providing the data. As an example, Fig. 8, modifying 230d at least one aspect of at least one data source DS for providing the data may, e.g., comprise modifying a frequency at which at least one data source DS for providing the data reports the data.

The optional block 232 of Fig. 8 symbolizes an optional use of the data managed according to block 230, e.g., as potential input information for the second machine learning model ML-2.

In some examples, Fig. 9, the instructions 106, when executed by the at least one processor 102, cause the apparatus 100 to perform at least one of: a) providing 240 at least one of a1) the first machine learning model ML-1 (Fig. 2), or a2) the second machine learning model (ML-2) (or an optional encoder ENC, Fig. 2), or b) operating 242 at least one of b1) the first machine learning model ML-1, or b2) the second machine learning model ML-2, e.g., for at least one of training or inference.

Thus, in other words, in some examples, the apparatus 100 (Fig. 1A, 2) according the disclosure may perform at least one of providing 240 (Fig. 9) or operating 242 at least one of the first or second machine learning models ML-1, ML-2 (and/or an optional encoder ENC for encoding context information I-CTX), e.g., in addition to performing aspects 200, 202 according to, e.g., Fig. 3. Note, however, that in some other examples, the apparatus 100 according the disclosure does not necessarily provide or operate any of the first or second machine learning models ML-1, ML-2. Rather, in some examples, the first or second machine learning models ML-1, ML-2 (e.g., as well as the optional encoder ENC) may, e.g., be provided and/or operated by at least one further device or apparatus (not shown), respectively.

In some examples, Fig. 10, the instructions 106, when executed by the at least one processor 102, cause the apparatus 100 to perform at least one of: a) dynamically (e.g., during an operation, e.g., during at least one of training or inference of, e.g., the second machine learning model ML-2) changing 250 the one or more characteristics ML-2-IN-char for the input information ML-2-IN for the second machine learning model ML-2, e.g., for at least one of training or inference, based at least on the first information I-1 (and, optionally, also based on the second information I-2), or b) dynamically modifying 252 at least one aspect of managing data for the second machine learning model ML-2 based at least on the second information I-2 (and, optionally, also based on the first information I-1).

In some examples, Fig. 10, dynamically changing 250 the one or more characteristics for the input information for the second machine learning model based at least on the first information may be performed to improve, e.g., dynamically improve, at least one of a) predictive accuracy, or b) operational costs of the second machine learning model ML-2, or c) a combination of the predictive accuracy and the operational costs of the second machine learning model, e.g., depending on the context CTX. Thus, in some examples, aspects influencing at least one of the predictive accuracy or the operational costs of the second machine learning model ML-2 may be dynamically changed, e.g., during runtime, e.g., inference (or training), of the second machine learning model ML-2, which in some examples e.g. enables to dynamically optimize operational costs of the second machine learning model ML-2, thus, e.g., saving energy, e.g., for performing the inference. In some examples, e.g., depending on a change of the context CTX, substantial energy savings may thus be attained by dynamically adapting the one or more characteristics for the input information for the second machine learning model based at least on the first information.

In some examples, Fig. 10, the managing of data for the second machine learning model ML-2 based at least on the second information I-2, also see block 252, may comprise at least one of: a) collecting the data, or b) processing the data, or c) storing the data, or d) handling at least one data source DS (Fig. 2) configured to provide the data.

Some examples, Fig. 1B, relate to an apparatus 100' comprising means 102' for: determining 200 (Fig. 3), using a first machine learning model ML-1, one or more characteristics for input information for a second machine learning model ML-2 based on first information characterizing a context associated with the second machine learning model, providing 202 the input information having the determined one or more characteristics to the second machine learning model ML-2.

In some examples, Fig. 1B, the means 102' for determining 200 the one or more characteristics and for providing 202 the input information having the determined one or more characteristics to the second machine learning model may, e.g., comprise at least one processor 102 (also see, for example, Fig. 1A), and at least one memory 104 storing instructions 106 that, when executed by the at least one processor 102, cause the apparatus 100' (Fig. 1B) to perform at least one of the aforementioned aspects of determining 200 the one or more characteristics and of providing 202 the input information having the determined one or more characteristics to the second machine learning model.

In some examples, Fig. 1B, the means 102' for determining 200 the one or more characteristics and for providing 202 the input information having the determined one or more characteristics to the second machine learning model may, e.g., comprise circuitry 104' configured to perform at least one of the aforementioned aspects of determining 200 the one or more characteristics and of providing 202 the input information having the determined one or more characteristics to the second machine learning model.

In some examples, the term "circuitry" 104', as used in this application, may, e.g., refer to one or more or all of the following:
(a) hardware-only circuit implementations (such as implementations in only analog and/or digital circuitry), or
(b) combinations of hardware circuits and software, such as:
   (b1) a combination of analog and/or digital hardware circuit(s) with software/firmware and
   (b2) any portions of hardware processor(s) with software (including digital signal processor(s)), software, and
   memory(ies) that work together to cause an apparatus, to perform various aspects of the disclosure), or
(c) hardware circuit(s) and or processor(s), such as a microprocessor(s) or a portion of a microprocessor(s), that requires software (e.g., firmware) for operation, but the software may not be present when it is not needed for operation.

In some examples, this definition of circuitry applies to all uses of this term in this application, including in any claims. As a further example, as used in this application, the term circuitry also covers an implementation of, e.g., merely, a hardware circuit or processor (or multiple processors) or portion of a hardware circuit or processor and its (or their) accompanying software and/or firmware.

Some examples, Fig. 3, relate to a method, comprising: determining 200, using a first machine learning model, one or more characteristics for input information for a second machine learning model based on first information characterizing a context associated with the second machine learning model, providing 202 the input information having the determined one or more characteristics to the second machine learning model.

In the following, further aspects and examples are disclosed, which, in some examples, may be combined with at least one of the aspects and/or examples disclosed above.

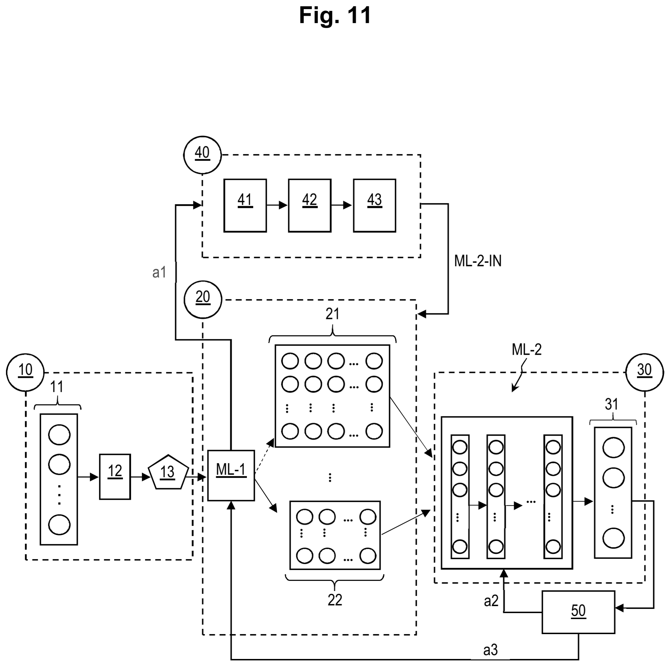

Fig. 11 schematically depicts an architecture comprising the first and second machine learning models ML-1, ML-2, as explained above.

Dashed rectangle 10 symbolizes aspects associated with a context CTX (Fig. 2) associated with the second machine learning model ML-2 according to some examples. Element 11 symbolizes context information, element 12 represents an optional encoder, also see block ENC of Fig. 2, and element 13 symbolizes encoded context information as may be obtained by the encoder 12.

Dashed rectangle 20 symbolizes aspects of the first machine learning model ML-1 and different input information 21, 22 for the second machine learning model ML-2 having different characteristics, for example different dimensions. As an example, input information 21 symbolizes time series information organized in form of a matrix having T columns and M rows, whereas input information 22 symbolizes time series information organized in form of a matrix having T' columns and M' rows, wherein, for examples, T' is smaller than or equal to T, wherein, for example, M' is smaller than or equal to M. In accordance with the principle of the disclosure, the first machine learning model ML-1 may determine, based on the encoded context information 13, one or more characteristics for the input information to be provided to the second machine learning model ML-2. In the present example of Fig. 11, based on this determination, either the input information 21 or the input information 22 may be provided to the second machine learning model ML-2.

Dashed rectangle 30 symbolizes aspects of the second machine learning model ML-2, wherein element 31 symbolizes an output, e.g., predictions, of the second machine learning model ML-2, e.g., provided by the second machine learning model ML-2 based on the respective input information as provided based on the determination using the first machine learning model ML-1.

Dashed rectangle 40 symbolizes aspects of data handling, e.g., for providing input information ML-2-IN having the one or more characteristics as determined using the first machine learning model ML-1. Element 41 symbolizes aspects of collecting data, which, in some examples, may be influenced, e.g., by the first machine learning model ML-1, e.g., by or based on the one or more characteristics ML-2-IN-char for the input information ML-2-IN for the second machine learning model ML-2 as may be determined by the first machine learning model ML-1. Note that in some other embodiments, the data collection 41 may, e.g., be performed independently of the one or more characteristics ML-2-IN-char. Element 42 symbolizes aspects of processing data, which, in some examples, may be influenced, e.g., by the first machine learning model ML-1, e.g., by or based on the one or more characteristics ML-2-IN-char for the input information ML-2-IN for the second machine learning model ML-2 as may be determined by the first machine learning model ML-1. Element 43 symbolizes a data base for at least temporarily storing data that may potentially be provided to the second machine learning model ML-2 as the input information ML-2-IN. In this regard, arrow a1 generally symbolizes that at least one aspect of the data handling 40 of Fig. 11 may at least temporarily be performed based on an operation of the first machine learning model ML-1, e.g., based on the one or more characteristics ML-2-IN-char for the input information ML-2-IN for the second machine learning model ML-2 as determined by the first machine learning model ML-1.

Element 50 of Fig. 11 symbolizes an aggregated cost function which may represent at least one of a) a loss of the second machine learning model ML-2, e.g., characterizing a predictive accuracy of the second machine learning model ML-2, or b) operational costs (e.g., characterizing training time or energy consumption) of the second machine learning model ML-2, which may, e.g., depend on the one or more input characteristics of the input information ML-2-IN. Arrow a2 symbolizes aspects of a backpropagation of at least one of the loss and the operational costs, which, in some examples, may also be combined to represent the aggregated cost function, wherein the backpropagation may, e.g., be used for a training of at least the second machine learning model ML-2, e.g., for adapting one or more parameters, such as, e.g., weights, of the second machine learning model ML-2. Similarly, arrow a3 symbolizes aspects of a backpropagation of at least one of the loss and the operational costs, or the aggregated costs, wherein the backpropagation may, e.g., be used for a training of at least the first machine learning model ML-1, e.g., for adapting one or more parameters, such as, e.g., weights, of the first machine learning model ML-1. In some examples, e.g., based on the aggregated cost function 50, both machine learning models ML-1, ML-2 may be, e.g., jointly, trained, wherein parameters of both the first machine learning model ML-1 and the second machine learning model ML-2 may be adjusted.

In some examples, information related to the context CTX (Fig. 2) may be retrieved repeatedly, e.g., periodically or in a continuous manner. In some examples, collected context information may be used for at least one of training or inference of at least one of the machine learning models ML-1, ML-2. In some examples, the context information may also be used to determine which policies should be taken or applied, e.g., at each moment, e.g., by the second machine learning model ML-2. In some examples, a policy may, e.g., determine that a value of a time series should be predicted, e.g., using measurements with a higher granularity (e.g., taken in intervals of 1 minute) or using measurements with a lower granularity (e.g., taken in intervals of 1 hour).

In some examples, data types which may be used as context information may, e.g., include at least one of: a) temporal context (e.g., hour of the day, the day of the week, the month, etc.), or b) environment context (e.g., temperature, weather conditions, pressure, humidity, etc.), or c) data source context (e.g., device used to retrieve/generate the data, nature of the data (e.g., synthetic/real), etc.), or d) human-centric context, such as, e.g., working context (e.g., bank holidays, opening hours of a factory/office, etc.), or e) external context (e.g., traffic in a city, price of gas, criminality index of a city/country, etc.), to name a few. In some examples, the context information may be of different nature and may vary in size considerably, e.g., depending on a use case. In some examples, e.g., for cases where context information is comparatively complex, encoding techniques may be used to derive a compact representation of the context (i.e., an encoded context), see the optional encoder ENC of Fig. 2.

In some examples, the one or more characteristics for the input information for the second machine learning model may be determined based on context information, e.g., based on the first information I-1, as explained above. In some examples, the first machine learning model ML-1 determines, e.g., decides the one or more characteristics ML-2-IN-char for the input information ML-2-IN for the second machine learning model ML-2, e.g., at inference time (and/or for training). In some examples, the first machine learning model ML-1 may also determine information that controls a way in which data, e.g., representing potential input information for the second machine learning model ML-2, is managed, see, for example, arrow a1 of Fig. 11.

In some examples related to training, as already mentioned above, the first machine learning model ML-1 and the second machine learning model ML-2 may be trained together, e.g., jointly, wherein, for example, encoded context information (e.g., first information I-1) may be used as an input to the first machine learning model ML-1, wherein further training data for is provided to the second machine learning model ML-2.

In some examples, it is also possible to combine the first machine learning model ML-1 with the second machine learning model ML-2, e.g., to obtain an aggregated machine learning model (not shown). In some examples, the abovementioned aspects related to training and/or inference of the machine learning models ML-1, ML-2 may also apply, correspondingly, to such aggregated machine learning model.

In some examples, the one or more characteristics for the input information ML-2-IN (Fig. 2) may characterize a shape of the input information. As an example, using time series type input information, a first input shape may, e.g., be characterized by the values of M features taken during T measurements, whereas a second input shape, which is different from the first input shape, may, e.g., have M' many features, with M' <> M, and/or may comprise T' many measurements, with T' <> T, or any other considered shape. Similar to these examples related to the shape of the input information, alternative or additionally, one or more further characteristics for the input information may be chosen or changed, e.g., depending on the context CTX (Fig. 2), e.g., as represented by the first information I-1.

In some examples, once the one or more characteristics for the input information for the second machine learning model ML-2 is/are determined, the input information ML-2-IN having the determined one or more characteristics may be provided to the second machine learning model ML-2, e.g. for processing by the second machine learning model ML-2, which, in some examples, may be a DNN.

As mentioned above, during training, e.g. after generating output information ML-2-OUT, e.g., predictions, a cost associated with the generation of the predictions (e.g., both in terms of loss (e.g., predictive accuracy) and cost, e.g., operational cost) may be backpropagated, e.g., to adjust one or more weights of the second machine learning model ML-2. Backpropagation, in some examples, may also be used to adjust one or more weights of the first machine learning model ML-1. In some examples, for training at least the second machine learning model ML-2, training data TD (also see block 207 of Fig. 4) may be presented to the second machine learning model ML-2, the training data TD comprising different characteristics.

In some examples, Fig. 2, during an inference phase, the first machine learning model ML-1 determines, based on the context, e.g., based on the first information I-1, the one or more characteristics for the input information ML-2-IN for the second machine learning model ML-2 (e.g., characterizing, but not limited to, a shape of the input information) and, accordingly, triggers one or more mechanisms related to at least one of a) data collection, or b) data processing, or c) data storage, e.g., to modify a pace and/or any other way of handling the data. In some examples, this enables to perform aspects of data handling based on the context, wherein, for example, a frequency of data collection may be adapted to a specific context, which, in some examples, may yield energy savings and/or savings of storage space.

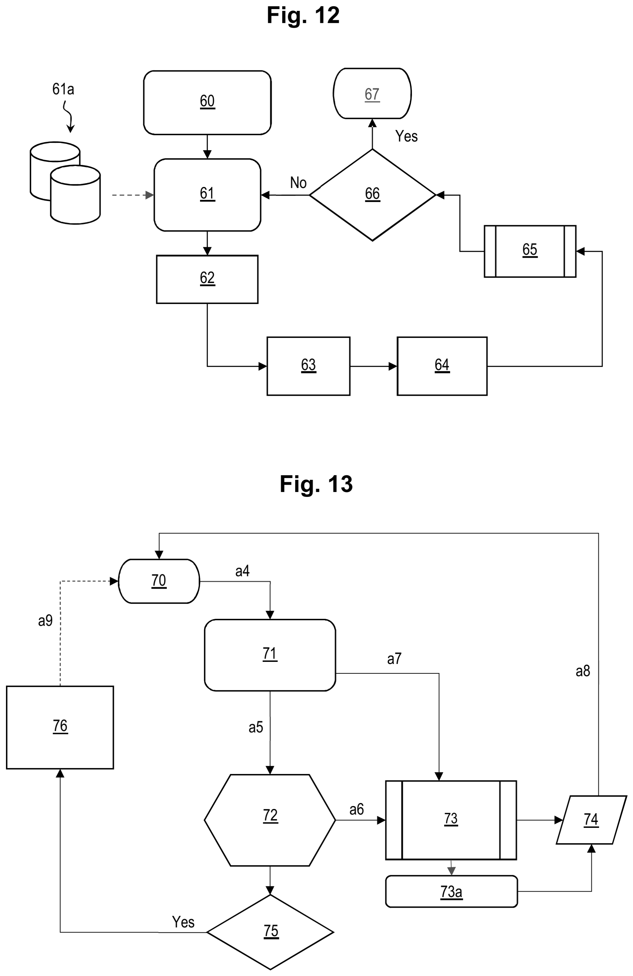

Fig. 12 schematically depicts aspects of training associated with the example architecture of Fig. 11. Element 60 symbolizes an initialization of at least one of the machine learning models ML-1, ML-2, e.g., along with training parameters (e.g., number of epochs, data partitions to be used, etc.). Element 61 symbolizes retrieving training data and context information, e.g., from one or more databases 61a, e.g., to be fed it into at least one of the machine learning models ML-1, ML-2. Element 62 symbolizes an iterative selection of different input information and/or one or more characteristics for the input information for the training, e.g., at least of the second machine learning model ML-2. Element 63 symbolizes an optional adaptation of the input (e.g., input layer) of the second machine learning model ML-2, e.g., based on the one or more characteristics for the input information as determined by element 62. Element 64 symbolizes performing a forward pass using the second machine learning model ML-2, e.g., to obtain a predictive output from the second machine learning model ML-2. In some examples, element 64 may also comprise performing a forward pass using the first machine learning model ML-1, e.g., using the context information as, e.g., obtained by element 61. Element 65 symbolizes determining a predictive loss and a cost of running the second machine learning model ML-2, wherein in some examples, the predictive loss and the cost may, e.g., be aggregated using a given cost function, to obtain an aggregated cost. In some examples, the aggregated cost may be used, e.g., to update parameters, e.g., the weights, of at least one of the machine learning models ML-1, ML-2. Element 66 symbolizes a determination whether a predetermined amount of training data and/or characteristics for the input information have been used for the training. If so, the procedure continues with element 67, e.g., finishing the training. If not, e.g., if there are further training data and/or characteristics for the input information that may be used for the training, the procedure may proceed with element 61, e.g., retrieving the further training data and/or characteristics for the input information.

In some examples, at least one further criterion for determining whether to finish the training may be used, e.g., a criterion based on an early stopping procedure. In some examples, early stopping denotes a regularization technique that may be used during the training of deep neural networks to prevent overfitting by halting training when the model's performance on a validation set ceases to improve.

Fig. 13 schematically depicts aspects of inference associated with the example architecture of Fig. 11.

Element 70 symbolizes one or more data sources, which, e.g., provide data on a continuous basis, e.g., in the form of at least one data stream a4. Element 71 symbolizes retrieving data for inference as well as context information from the one or more data sources 70. The context information is provided to element 72, also see arrow a5, wherein element 72 symbolizes the first machine learning model ML-1 (Fig. 2) which determines an input shape a6 for the second machine learning model 73, e.g., based on the context information a5. In other words, in some examples, an input (e.g., input layer) of the second machine learning model ML-2 may be re-configured, e.g., based on the context information a5. Arrow a7 symbolizes retrieved data for inference by the second machine learning model 73 being forwarded, e.g., from the retrieval block 71, e.g., with one or more characteristics as determined by the first machine learning model 72. Element 73a symbolizes a monitoring of the second machine learning model 73, e.g., to determine the cost (e.g., in terms of energy consumption) of running the second machine learning model 73. Element 74 symbolizes determining an aggregated cost based on the predictive accuracy of the second machine learning model 73 and the cost as determined by the model monitoring block 73a. In some examples, the aggregated cost as determined by element 74 may be used to update, see arrow a8, at last one aspect of the data sources 70. In some examples, based on the aggregated cost as determined by element 74, the context information may be modified or updated, respectively. Element 75 symbolizes detecting a change of the one or more characteristics for the input information for the second machine learning model 73 as, e.g., determined by the first machine learning model 72. If such change of the one or more characteristics for the input information are detected, corresponding changes may be applied to at least one of a) a data collection 76, or b) a processing of the data, or c) storage of the data, thus, e.g., modifying the behavior of at least one of the data sources e70, also see the dashed arrow a9.

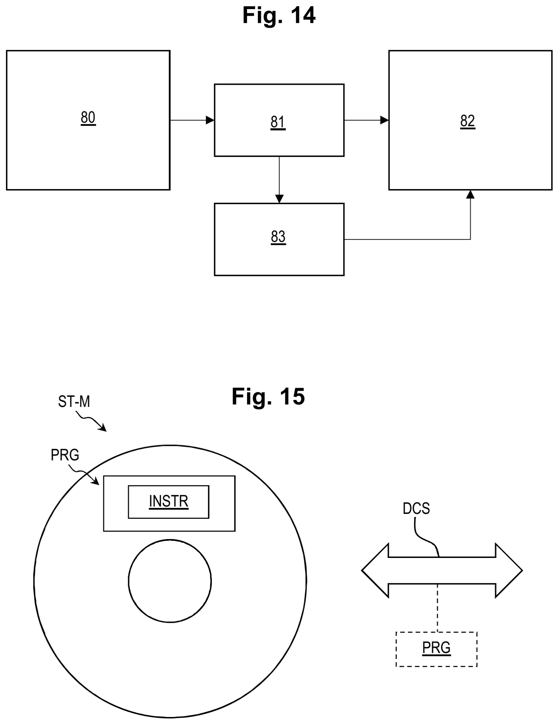

Fig. 14 schematically depicts aspects of an integral machine learning pipeline with data handling and machine learning model processing and deployment capabilities based on the principle of the disclosure. Element 80 symbolizes a machine learning model, e.g., the second machine learning model ML-2 (Fig. 2), in a first variant. The machine learning model 80 of Fig. 14 may, e.g., be characterized by a first function F(I; W; B; A), wherein I characterizes input information, e.g., input features, wherein W characterizes weights, e.g., organized as a weight matrix, wherein B characterizes a bias, wherein A characterizes activation function(s) associated with the machine learning model 80. Element 81 of Fig. 14 symbolizes a context-based transformation which may, e.g., be performed according to some examples, e.g., based on the context, e.g., as characterized by the first information I-1 (Fig. 2). The context-based transformation 81 transforms the function F into a modified function F', also see block 82 of Fig. 14, which modified function F' may, e.g., be characterized as F'(I'; W; B; A). Element I' of the modified function F' denotes modified input information, e.g., input information, at least one characteristic of which is changed with respect to the input information I of function F, see block 80. In some examples, the modified input information I' may, e.g., be provided by block 83, which characterizes at least one of a) data collection, or b) data processing, or c) data storage.

In some examples, the configuration of Fig. 14 denotes a structure which enables to, e.g., automatically (e.g., without human interaction), select one or more characteristics (e.g., but not limited to, a shape) for the input information I, I' for the second machine learning model ML-2, which, in some examples, may enable to regulate, e.g., a pace at which data is gathered and/or processed and/or stored.

As already explained above, the context CTX (Fig. 2) in which predictions are to be made by the second machine learning model ML-2 may be used for modifying at least one aspect of the input information and/or of the data handling for at least one of the machine learning models ML-1, ML-2. In some examples, the context CTX may also characterize at least one temporal aspect (e.g., hour of the day, day of the week, etc.) and/or potential constraints, e.g., in terms of cost of deployment related to at least the second machine learning model ML-2.

The principle according to the disclosure enables to dynamically influence, e.g., modify, one or more characteristic for the input information for at least the second machine learning model ML-2, e.g., during at least one of a) training, or b) inference, e.g., based on at least one of performance (e.g., predictive performance) or cost (e.g., operational cost).

In some examples, the principle according to the disclosure enables to control, e.g., regulate, an intensity in which data for performing inference using at least the second machine learning model ML-2 is collected and/or processed and/or stored.

In some examples, the principle according to the disclosure may enable an implementation of cost-effective machine learning-based solutions, e.g., able to offer comparatively high performance, e.g., whilst adapting themselves to varying situations and circumstances, as, e.g., characterized by the context CTX, e.g., to reduce their operating costs and/or to improve or maintain a predictive accuracy, e.g., even under operation with reduced operating costs.

Some examples, Fig. 15, relate to a computer program PRG comprising instructions INSTR which, when executed by an apparatus 100, 100', cause the apparatus 100, 100' to perform the method according to the disclosure.

Some examples, Fig. 15, relate to a a computer-readable storage medium ST-M, for example a non-transitory computer-readable storage medium, comprising the computer program PRG according to the disclosure.

Some examples, Fig. 15, relate to a data carrier signal DCS carrying and/or characterizing the computer program PRG according to the disclosure.

## Claims

1. An apparatus (100) comprising: at least one processor (102), and at least one memory (104) storing instructions (106) that, when executed by the at least one processor (102), cause the apparatus (100) at least to: determine (200), using a first machine learning model (ML-1), one or more characteristics (ML-2-IN-char) for input information (ML-2-IN) for a second machine learning model (ML-2) based on first information (I-1) characterizing a context (CTX) associated with the second machine learning model (ML-2), provide (202) the input information (ML-2-IN) having the determined one or more characteristics (ML-2-IN-SH) to the second machine learning model (ML-2).

2. The apparatus (100) according to claim 1, wherein the instructions (106), when executed by the at least one processor (102), cause the apparatus (100) to: determine (205), based on processing the input information (ML-2-IN) having the determined one or more characteristics (ML-2-IN-char) by using the second machine learning model (ML-2), second information (I-2) characterizing at least one of: a) a predictive accuracy of the second machine learning model (ML-2) with respect to the input information (ML-2-IN), or b) costs associated with an execution of the second machine learning model (ML-2) using the input information (ML-2-IN).

3. The apparatus (100) according to claim 2, wherein the instructions (106), when executed by the at least one processor (102), cause the apparatus (100) to: train (207) at least one of the first machine learning model (ML-1) or the second machine learning model (ML-2) based at least on the second information (I-2).

4. The apparatus (100) according to claim 3, wherein the training (207) comprises: providing training data (TD) with a plurality of different characteristics to the second machine learning model (ML-2).

5. The apparatus (100) according to any of the preceding claims, wherein the one or more characteristics (ML-2-IN-char) for the input information (ML-2-IN) characterize at least one of: a) a dimensionality (DIM) of the input information (ML-2-IN), or b) a resolution (RES) of the input information (ML-2-IN), or c) a modality (MOD) of the input information (ML-2-IN), or d) a numerical range (RNG) of the input information (ML-2-IN), or e) a noise (NOI) of the input information (ML-2-IN), or f) context metadata(CTX-META).

6. The apparatus (100) according to any of the preceding claims, wherein the instructions (106), when executed by the at least one processor (102), cause the apparatus (100) to perform at least one of: a) adapting (210) an input of the second machine learning model (ML-2) to the determined one or more characteristics (ML-2-IN-char), or b) processing (212) the input information (ML-2-IN) having the determined one or more characteristics (ML-2-IN-char) using the second machine learning model (ML-2).

7. The apparatus (100) according to any of the preceding claims, wherein the instructions (106), when executed by the at least one processor (102), cause the apparatus (100) to perform at least one of: a) processing (220) context information (I-CTX) characterizing the context associated with the second machine learning model (ML-2), or b) encoding (222) the context information (I-CTX) to obtain a condensed representation (I-CTX') of the context.

8. The apparatus (100) according to any of the preceding claims, wherein the context (CTX) characterizes at least one of: a) a policy for the second machine learning model (ML-2), or b) a temporal context, or c) an environmental context, or d) information related to at least one data source configured to provide the input information (ML-2-IN), or e) a type of the input information (ML-2-IN), or f) a human-centric context, or g) traffic-related context information, h) energy cost-related context information, or i) safety-related context information.

9. The apparatus (100) according to any of the preceding claims, wherein the instructions (106), when executed by the at least one processor (102), cause the apparatus (100) to: manage (230) data for the second machine learning model (ML-2) based on at least one of a) the first information (I-1), or b) the determined one or more characteristics (ML-2-IN-char) for the input information (ML-2-IN).

10. The apparatus (100) according to claim 9, wherein managing (230) the data comprises at least one of: a) collecting (230a) the data, or b) processing (230b) the data, or c) providing (230c) at least a portion of the data as the input information (ML-2-IN) having the determined one or more characteristics (ML-2-IN-char) to the second machine learning model (ML-2), or d) modifying (230d) at least one aspect of at least one data source (DS) for providing the data.

11. The apparatus (100) according to any of the preceding claims, wherein the instructions (106), when executed by the at least one processor (102), cause the apparatus (100) to perform at least one of: a) providing (240) at least one of a1) the first machine learning model (ML-1), or a2) the second machine learning model (ML-2), or b) operating (242) at least one of b1) the first machine learning model (ML-1), or b2) the second machine learning model (ML-2).

12. The apparatus (100) according to any of the preceding claims, wherein the instructions (106), when executed by the at least one processor (102), cause the apparatus (100) to perform at least one of: a) dynamically changing (250) the one or more characteristics (ML-2-IN-char) for the input information (ML-2-IN) for the second machine learning model (ML-2) based at least on the first information (I-1), or b) dynamically modifying (252) at least one aspect of managing data for the second machine learning model (ML-2) based at least on the second information (I-2).

13. An apparatus (100') comprising means (102') for: determining (200), using a first machine learning model (ML-1), one or more characteristics (ML-2-IN-char) for input information (ML-2-IN) for a second machine learning model (ML-2) based on first information (I-1) characterizing a context associated with the second machine learning model (ML-2), providing (202) the input information (ML-2-IN) having the determined one or more characteristics (ML-2-IN-char) to the second machine learning model (ML-2).

14. A method, comprising: determining (200), using a first machine learning model (ML-1), one or more characteristics (ML-2-IN-char) for input information (ML-2-IN) for a second machine learning model (ML-2) based on first information (I-1) characterizing a context associated with the second machine learning model (ML-2), providing (202) the input information (ML-2-IN) having the determined one or more characteristics (ML-2-IN-char) to the second machine learning model (ML-2).

15. A computer program (PRG) comprising instructions (INSTR) which, when executed by an apparatus (100; 100'), cause the apparatus (100; 100') to perform the method according to claim 14.

16. A computer-readable storage medium (ST-M), for example a non-transitory computer-readable storage medium, comprising the computer program (PRG) according to claim 15.

17. A data carrier signal (DCS) carrying and/or characterizing the computer program (PRG) according to claim 15.
